# EUROPEAN PATENT SPECIFICATION

(11) **EP 1 861 996 B1**
(45) Date of publication and mention of the grant of the patent: **24.07.2013**
(21) Application number: 06728648.4
(22) Date of filing: 28.02.2006
(51) Int. Cl.: H04N 5/225

(54) **IMAGE-TAKING APPARATUS AND PROJECTION MODULE**
BILDERFASSUNGSVORRICHTUNG UND PROJEKTIONSMODUL
DISPOSITIF DE PRISE D IMAGE ET MODULE DE PROJECTION

(30) Priority: 25.03.2005 JP 2005087668
(43) Date of publication of application: 05.12.2007
(73) Proprietor: FUJIFILM Corporation, Minato-ku Tokyo 106-8620 (JP)
(72) Inventor: CHO, Michio c/o FUJIFILM Corporation, Asaka-shi, Saitama, 3518585 (JP); HOSHINO, Kenji c/o FUJIFILM Corporation, Asaka-shi, Saitama, 3518585 (JP)
(74) Representative: Stevens, Jason Paul
(86) International application number: PCT/JP2006/304229
(87) International publication number: WO 2006/103873

(56) References cited:
- EP-A- 0 523 927
- WO-A-2004/107457
- US-A1- 2003 021 032
- PATENT ABSTRACTS OF JAPAN vol. 1995, no. 03, 28 April 1995 (1995-04-28) & JP 06 347690 A (CANON INC), 22 December 1994 (1994-12-22) cited in the application
- PATENT ABSTRACTS OF JAPAN vol. 1995, no. 02, 31 March 1995 (1995-03-31) & JP 06 313839 A (ASAHI OPTICAL CO LTD), 8 November 1994 (1994-11-08) cited in the application

## Description

### Technical Field

The present invention relates to an image-taking apparatus provided with an image pickup device and configured to form an object image on the image pickup device and thereby to generate an image signal, and to a projection module configured to project a light beam.

### Background Art

An image-taking apparatus including auto focus section that adjusts a focal point on the basis of an imaging condition of an object image is configured to detect object image contrast and set a point of focus to a position where a peak is obtained. Accordingly, when it is not possible to obtain the contrast between the object and an object field due to low brightness of the object field, a focusing performance is reduced and an unfocused state may occur in the worst case. Therefore, in order to enhance the focusing condition, there is an attempt to illuminate the object by projecting auxiliary light onto the object and thereby to improve the focusing performance by enhancing the object contrast. A light emitting diode of low power consumption and the like are used as a light source for such projection.

However, when the light emitting diode is used as the light source of the auto focus section, an amount of light may be deficient due to the low power consumption, and the illumination may become dark as a whole and the object contrast may be unobtainable. Accordingly, there is an attempt to use a condenser lens or the like to condense the light emitted from the light emitting diode and to project the auxiliary light in a beam shape onto the object, thereby enhancing the focusing performance by obtaining the object contrast only in terms of a peripheral potion thereof.

Here, defects of the auto focus section configured to project the auxiliary light in the beam shape and to obtain the object contrast at the projected portion will be described.

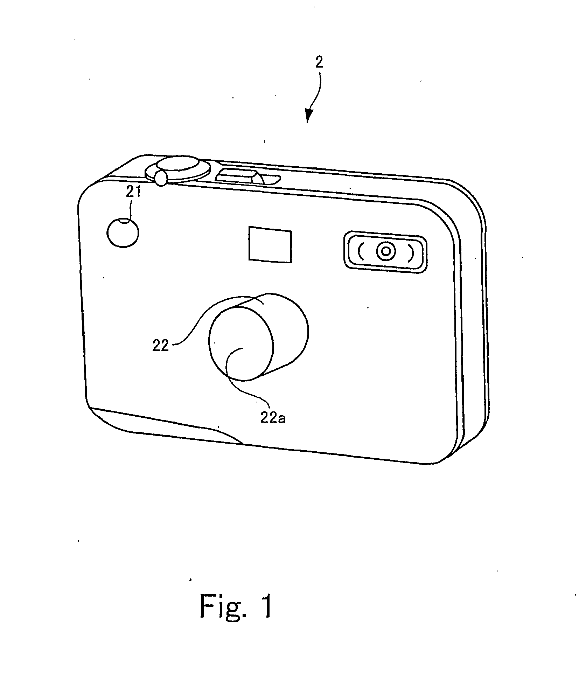

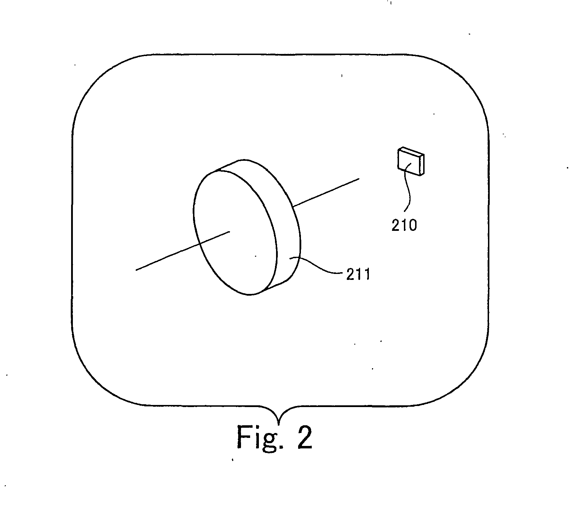

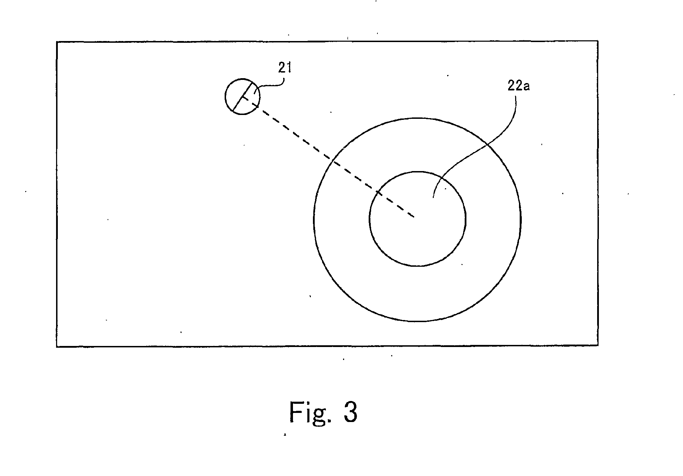

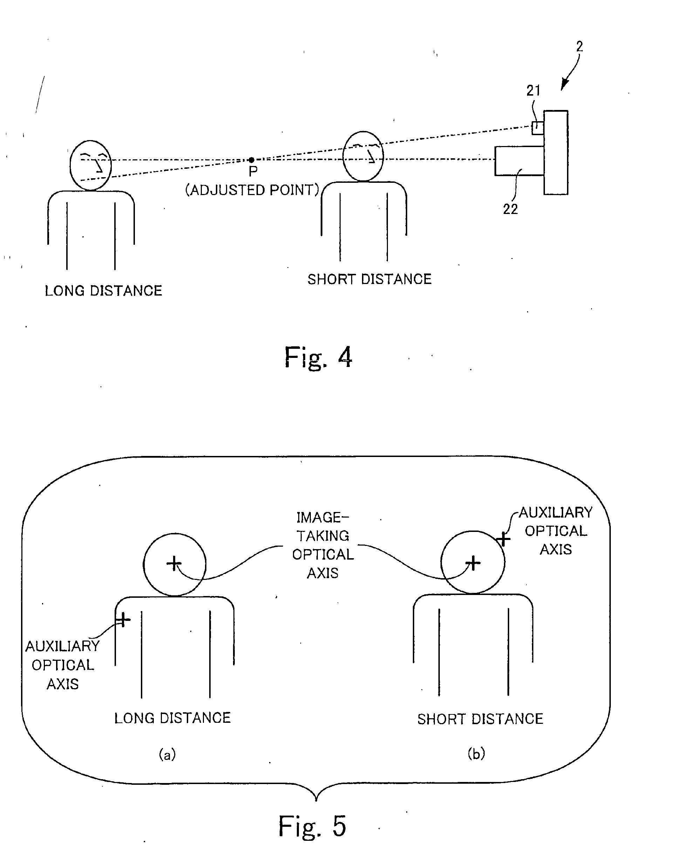

Fig. 1 is a view showing an image-taking apparatus provided with an auxiliary light projecting section including the LED and the condenser lens, and Fig. 2 is a view showing a relation between the LED 210 embedded in the auxiliary light projecting section in Fig. 1 and a projecting member configured to form the light emitted from the LED 210 into the beam shape, which is the condenser lens 211 in this case. Meanwhile, Fig. 3 is a view showing a positional relation between a position of an auxiliary light projection window shown in Fig. 1 and a position of image-taking optical system, and Fig. 4 is a view showing a difference between an optical axis of the auxiliary light and an image-taking optical axis emitted from the respective positions shown in Fig. 3. Moreover, Fig. 5 is a view for explaining parallax between the auxiliary light projecting section and the image-taking optical system.

As shown in Fig. 1 and Fig. 3, the following explanation will be made on the assumptions that an auxiliary light projection window 21 is located in an obliquely upper position on the left of a lens barrel 22 incorporating the image-taking optical system and that the auxiliary light is emitted from the window 21 toward the object. But there is no particular limitation to the layout between the auxiliary light projecting section, which emits the auxiliary light toward the object from the auxiliary light projecting section located inside the image-taking apparatus, and the auxiliary light projection window 21. Here, the auxiliary light projecting section is assumed to be located in the obliquely upper position on the left.

The condenser lens 211 shown in Fig. 2 is fitted into this auxiliary light projection window 21, and the LED 210 which is the light source is disposed in a focal position of the condenser lens 211. For this reason, when the auxiliary light of the LED 210 is emitted from the auxiliary light projection window 21, the focused auxiliary light formed into the beam shape (parallel light) by the condenser lens 211 is projected onto the object.

On the assumption that the center in an image frame is usually brought into focus in a posture to train the lens barrel on the object, the auxiliary light emitted from the projecting section is generally adjusted such that the auxiliary light is projected onto the center P of the image frame in the case of viewing the object image located 3 m away from the image-taking apparatus, for example.

For this reason, as shown in Fig. 4, the optical axis of the auxiliary light passes by a face when the object is located in a short distance close to the image-taking apparatus and the optical axis of the auxiliary light passes by a shoulder when the object is located in a long distance. That is, except the case when the object is located close to the adjusted point P, the view angle of the object by the image-taking optical system is displaced from the view angle of the object by the auxiliary light projecting section and parallax therefore comes into being.

As shown in Fig. 5, when viewing the image-taking apparatus side from the object side, the optical axis of the auxiliary light is located on an upper right side of the face and the image-taking optical axis is located around the center of the face in the case of the short distance. Meanwhile, the optical axis of the auxiliary light is located on a lower right side near the shoulder and the image-taking optical axis is located around the center of the face in the case of the long distance.

If the parallax occurs.between the image-taking optical axis and the projection optical axis as described above, the focusing function may be deteriorated as a consequence of a failure to obtain the sufficient object contrast for detecting a focused state within a focusing area except when the object is located in the vicinity of the given position P which is the adjusted point. A similar trouble may also occur in the case where displacement occurs between the image-taking optical axis and the projection optical axis due' to manufacturing error.

To improve this, there have been disclosed techniques for expanding a range of illumination to a range of occurrence of parallax by use of multiple projection elements (see Patent Documents 1 and 2, for example).

However, the techniques disclosed in Patent Documents 1 and 2 have a problem of an increase in the size of an image-taking apparatus attributable to the use of the multiple projection elements. Moreover, the technique disclosed in Patent Document 2 is configured to project light emitted from a light source by use of lenses designed for region splitting. Accordingly, the technique poses problems that illumination does not become very bright as a whole despite expansion of the range of illumination, and that the illumination becomes increasingly darker as the distance becomes longer.
(Patent Document 1) Japanese Patent Publication No. 3241868
(Patent Document 2) Japanese Unexamined Patent Application Publication No. 6(1994) - 313839.

Further, US 2003/021032, WO 2004/107457 and US 5319496 all disclose projection units in which light from an LED passes through an optical system. However, neither are used in conjunction with an image-taking apparatus.

In view of the foregoing circumstances, it is an object of at least the preferred embodiments of the present invention to provide an image-taking apparatus including an auxiliary light projecting section that is small in size in spite of using multiple projection elements and is capable of performing extensive illumination to a range including parallax while maintaining a certain degree of brightness until reaching a given distance, and to provide a projection module suitable for being loaded on the image-taking apparatus.

According to a first aspect of the present invention, there is provided an image-taking apparatus configured to focus an object image onto an image pickup device through an image-taking optical system and thereby to generate an image signal, comprising: an auto focus section that performs measurement utilizing distribution of brightness of field and performs auto focusing to adjust the image-taking optical system to a focused state, wherein the auto focus section includes an auxiliary light projecting section that projects an auxiliary light beam onto an object when performing auto focusing, and the auxiliary light projecting section includes: a light source having multiple luminous points; and a projection optical element which projects the light emitted from the multiple luminous points in a beam fashion onto the object and includes multiple projecting sections each being provided with a different optical axis and each projecting the multiple rays of light emitted from the multiple luminous points as multiple light beams, wherein the projection optical element is a single optical element subjected to region splitting into the multiple projecting sections, wherein each of the multiple projecting sections comprises a first surface on the light source's side and a second surface on the object's side both being subjected to region splitting as reflection surfaces, and both of the reflection surfaces of the first surface and the second surface of each of the projecting sections share an optical axis in common; wherein the projection optical element comprises parting lines between the reflection surfaces, said parting lines extending radially from an approximate centre.

In recent years, small light sources each incorporating multiple luminous points into one package are sold at reasonable prices. By applying such a small light source to the above-mentioned light source and disposing a projection optical element as defined above, it is possible to form the auxiliary light projecting section at low costs while avoiding a substantial increase in size of the auxiliary light projecting section, and to project the extensive auxiliary light including the multiple light beams toward the object. At this time, by overlapping the multiple light beams, it is possible to project the auxiliary light while maintaining an amount of light at a central portion and a surrounding area thereof to a given amount of light and extending a range of illumination.

For example, the range of illumination is extended to the range including parallax by forming multiple light beams as shown in Fig. 5. At this time, the light is projected by forming the multiple beams respectively with the multiple light sources instead of the conventional manner of projecting the light emitted from the single light source onto the object by use of a lens subjected to region splitting. Accordingly, even when the range of illumination is extended to the range including the parallax, it is possible to maintain brightness to a certain distance and to perform adequate illumination for surely obtaining object contrast.

That is, it is possible to realize an image-taking apparatus including an auxiliary light projecting section that is small in size in spite of using multiple projection elements and is capable of performing extensive illumination to a range including parallax while maintaining a certain degree of brightness until reaching a given distance.

When the projection optical element is a single optical element as defined above, it is possible to construct a smaller auxiliary light projecting section than a conventional type by combining the small light source with the small lens.

Each of the multiple projecting sections includes a first surface on the light source's side and a second surface on the object's side both being subjected to region splitting as reflection surfaces, and both of the reflection surfaces of the first surface and the second surface of each of the projecting sections share an optical axis in common.

In any case, the light emitted from each of the light sources passes through both of the reflection surfaces of the first surface and the second surface of each of the projecting sections, and is thereby projected onto the object in the number egual to the number of the reflection surfaces. At this time, by appropriately arranging the multiple light sources and the respective projecting sections, the multiple rays of beam light formed by the respective reflection surfaces into various shapes are severally projected onto the object as the auxiliary light that spreads around the point.

That is, it is possible to project beam light in a shape extending to a range including parallax onto an object as auxiliary light.

Meanwhile, when the projection optical element including the multiple projecting sections share parting lines among the reflection surfaces extending radially from an approximate center, it is easy to fabricate a molding die necessary for producing the projection optical element and is therefore possible to reduce production costs of the projection optical element.

Meanwhile, the multiple luminous points are preferably disposed one-by-one in respective positions surrounding a given central point.

When the multiple luminous points are disposed one-by-one in the respective positions surrounding the given central point, the light beams equal to the number of the luminous points are projected from the luminous points disposed in the respective positions surrounding the central point onto the object depending on the respective reflection surfaces. Here, when an image-taking optical axis is located in the center of those light beams, for example, the auxiliary light having a spread around the image-taking optical axis, i.e. the auxiliary light extended to the range including the parallax is projected.

Meanwhile, the above-mentioned small packages include the small package housing LEDs one-by-one in the respective positions surrounding the given central point. Accordingly, by applying the low-cost small package, it is possible to reduce costs of the entire auxiliary light projecting section together with reduction in the production costs of the projection optical element.

Meanwhile, the projection optical element is preferably configured to project the multiple rays of light emitted from the multiple luminous points such that one among the multiple light beams projected by each of the multiple projecting sections substantially overlaps one another. When multiple light beams are projected such that one among the multiple light beam by each of the multiple projecting sections can substantially overlap one another, brightness in a central portion of each of the light beams is increased and it is thereby possible to form the beam having the spread around the point P shown in Fig. 4 as the center, for example.

Here, the projection optical element may be configured to project the multiple rays of light emitted from the multiple luminous points so as to locate one of the multiple light beams projected by one of the projecting sections onto the center of the multiple light beams projected by another one of the projecting sections. Alternatively, the projection optical element may be configured to project the multiple rays of light emitted from the multiple luminous points so as to locate one of the multiple light beams projected by one of the projecting sections onto the center of two light beams out of the multiple light beams projected by another one of the projecting sections.

Meanwhile, the light source may include three luminous points while the projection optical system may include three projecting sections. Alternatively, the light source may include four luminous points while the projection optical system may include two projecting sections.

Here, the multiple projecting sections are preferably set such that an interval between optical axes of these multiple projecting sections substantially coincides with an interval between the multiple luminous points.

In this way, the multiple rays of light emitted from the multiple luminous points are projected such that one among the multiple light beams projected by the multiple projecting sections substantially overlaps one another.

Meanwhile, the multiple projecting sections are preferably set such that the interval between the optical axes of these multiple projecting sections is substantially half as long as the interval between the multiple luminous points.

In this way, the projection optical element can project the multiple rays of light emitted from the multiple luminous points so as to locate one of the multiple light beams projected by one of the projecting sections onto the center of the multiple light beams projected by another one of the projecting sections. Alternatively, the projection optical element can project the multiple rays of light emitted from the multiple luminous points so as to locate one of the multiple light beams projected by one of the projecting sections onto the center of two light beams out of the multiple light beams projected by another one of the projecting sections.

Moreover, in terms of a pattern made of all multiple light spots on a plane spread orthogonally to multiple light beams which is formed by the multiple light beams projected from the two projecting sections, when a dimension in a first direction identical to a direction of linking the image-taking optical system with the projection optical element in the plane is compared with a dimension in a second direction orthogonal to the first direction in the plane, the projection optical element is preferably disposed in an orientation to form a shape such that the first direction extends longer than the second direction. In this way, on the assumption that the line connecting the image-taking optical axis to the auxiliary light emission axis as described in Fig. 4 is the first direction, when the dimension in the first direction is compared with the dimension in the second direction orthogonal to the first direction in the plane, a beam in an orientation to satisfy the shape such that the dimension in the first direction extends longer than the second direction is formed and projected onto the object. That is, the beam configured to absorb the displacement between the optical axes shown in Fig. 5, i.e. the parallax is formed and projected.

According to a second aspect of the invention, there is provided a projection module configured to project a light beam, for use as the auxiliary light projecting section of the image-taking device according to the first aspect.

### Brief description of the Drawings

Fig. 1 is a view showing an image-taking apparatus including an auxiliary light projecting section having an LED and a condenser lens.
Fig. 2 is a view showing a relation between an LED 210 located inside the auxiliary light projecting section of Fig. 1 and a projecting member for forming light emitted from the LED 210 into a beam shape, which is a condenser lens 211 herein.
Fig. 3 is a view showing a positional relation between a position of an auxiliary light projection window and an image-taking optical system shown in Fig. 1.
Fig. 4 is a view explaining a difference between an optical axis of auxiliary light and an image-taking optical axis to be emitted from respective positions shown in Fig. 3.
Fig. 5 is a view for explaining displacement (parallax) when an object is located on a short distance side and when the object is located on a long distance side.
Fig. 6 is a view showing a digital camera representing an embodiment of an image-taking apparatus of the present invention.
Fig. 7 is a block diagram of a configuration of a signal processing section arranged inside a digital camera 100.
Fig. 8 is a flowchart showing procedures of image-taking processing to be executed by a main CPU 110.
Fig. 9 is a view for explaining a configuration of an auxiliary light projecting section.
Fig. 10 is a view showing positional relations among a lens intended to achieve cost reduction and LEDs 160a to 160c positioned at three luminous points.
Fig. 11 shows a projection pattern to be obtained from light emitted from one luminous point 160a and a projection pattern showing as to how the light emitted from the three luminous points shown in Fig. 10 is projected onto an object by a lens having three split regions which corresponds to a projection optical element according to the present invention.
Fig. 12 is a view showing positional relations among a layout of light points and a lens as similar to Fig. 10.
Fig. 13 shows projection patterns when auxiliary light is projected onto an object in accordance with the positional relations among the light points and the lens shown in Fig. 12.
Fig. 14 shows an example when the projection pattern is modified as shown in Fig. 15 by twisting parting lines shown in part (b) of Fig. 12 by 30 degrees.
Fig. 15 is a view showing the projection pattern in the case of performing projection in the layout of Fig. 14.
Fig. 16 is a view for explaining a layout interval between light points when providing four LEDs as a light source.
Fig. 17 is a view showing the layout interval between the LEDs and an interval between optical axes of a lens.
Fig. 18 is a view showing a projection pattern when a layout interval between the light points and the lens shown in Fig. 16 is set to σ3 ≈ σ4.
Fig. 19 is a view showing a projection pattern when the layout interval between the light points and the lens shown in Fig. 16 is set to σ3 ≈ 2σ4.
Fig. 20 is a view corresponding to Fig. 5, which explains an illumination range when auxiliary light is projected by use of the projection pattern shown in Fig. 19.
Fig. 21 is a view for explaining a layout of a lens as a projection optical element and the layout relation between the image-taking optical system and the auxiliary light projecting section described in Fig. 2.

### Best Mode for Carrying Out the Invention

Now, an embodiment of the present invention will be described.

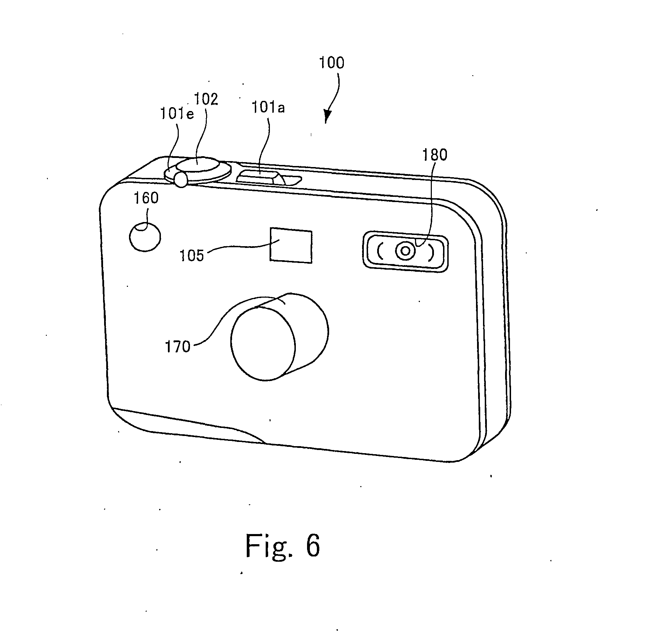

Fig. 6 is a view showing a digital camera representing an embodiment of an image-taking apparatus of the present invention.

A digital camera 100 shown in Fig. 6 is an image-taking apparatus configured to focus an object image on an image pickup device through an image-taking optical system and thereby to generate an image signal, which includes an AF section that performs measurement utilizing distribution of brightness of field and performs auto focusing (hereinafter referred to as AF) to adjust the image-taking optical system to a focused state. Here, the AF section includes an auxiliary light projecting section that projects an auxiliary light beam onto an object when performing the AF. A configuration of this AF section will be described later.

First, an external configuration of the digital camera shown in Fig. 6 will be described.

As shown in Fig. 6, a lens barrel 170 is located in the center of a camera body of the digital camera 100 according to this embodiment. An image-taking optical system including a focusing lens that constitutes part of the AF section is incorporated in the lens barrel 170, so that an image of the object is guided to a CCD solid-state image pickup device (hereinafter referred to as a CCD) located inside the digital camera 100 through the image-taking optical system. Meanwhile, a viewfinder 105 and an AF auxiliary light emission window 160 are provided above the lens barrel 170. Moreover, a flash light emission window 180 is located on the opposite side of the AF auxiliary light emission window 160.

In this digital camera 100, an image signal representing a through image or a captured image is generated by the CCD inside the digital camera 1 to be described later. In addition, the AF and AE (auto exposure) are performed by the AF section and an AE section by use of distribution of brightness of field included in the image signal obtained by the CCD, whereby a focal position and brightness of field are detected. Moreover, the digital camera 100 of this embodiment is provided with a shutter release button 102 that has two operational aspects of a half push and a full push. At the time of the half push, photometry of an object field is performed by the AE section included in the digital camera of this embodiment, and a diameter of an aperture is adjusted so as to conform to the brightness of field in response to a result thereof. Meanwhile, measurement utilizing the distribution of brightness of field (in this digital camera 100, the image signal obtained by the CCD is separated into a brightness signal and a color signal and distribution of brightness is extracted from the brightness signal) is performed by the AF section, and the focusing lens is located in a position corresponding to the focal position. After the aperture and the focal position are adjusted in this way, an exposure start signal is supplied at the time of the full push to the CCD to be described later in response to full push timing, and image taking is thereby started.

Meanwhile, upon detection of the focal position by the AF section, the digital camera of this embodiment is configured to improve a focusing performance within a focal area on an image-taking optical axis by projecting auxiliary light including the parallax as described in Fig. 2 from the auxiliary light projection window 160 as shown in Fig. 6 onto the object. A configuration of this auxiliary light projection window 160 and a beam shape of the auxiliary light will also be described later.

In this way, even when the object is located in front of or behind (in a short distance or a long distance relative to) the adjusted point P as described in Fig. 2, it is definitely possible to obtain the object contrast when setting a position near the image-taking optical axis as a focal area and thereby to perform the accurate AF.

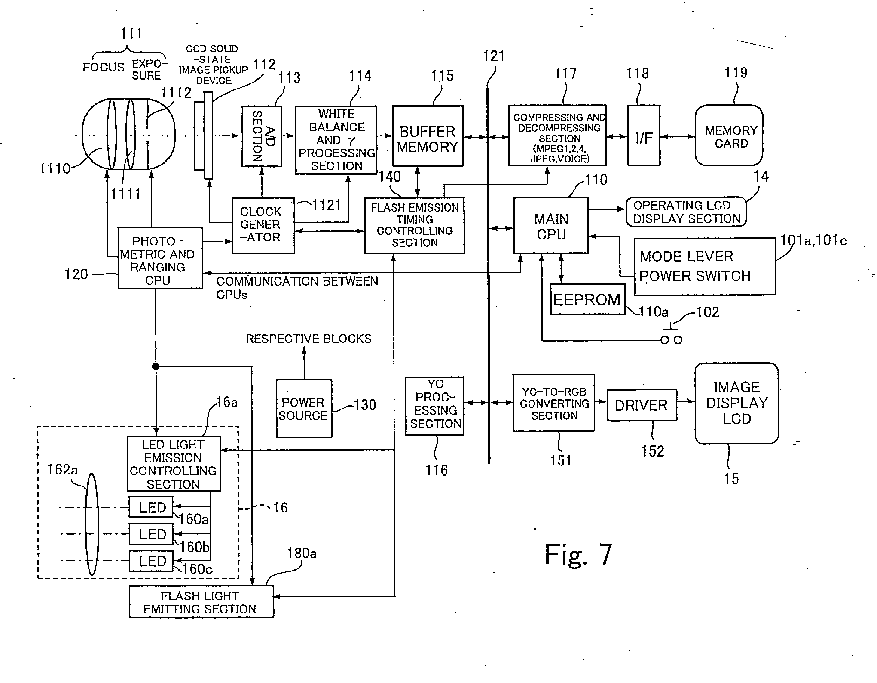

Now, an internal configuration of the digital camera 100 will be described with reference to Fig. 7.

Fig. 7 is a block diagram of a configuration of a signal processing section arranged inside the digital camera 100.

In the digital camera 100 of this embodiment, all processing is controlled by a main CPU 110, and operation signals are supplied separately from a power switch 101a, an image-taking mode dial 101e, and the like to an input section of this main CPU 110. The main CPU 110 includes an EEPROM 110a, and a program necessary for operating the digital camera 100 is written in this EEPROM 110a. When the power switch 101a of the digital camera having this configuration is turned on, operations of this digital camera 100 as a whole are controlled by the CPU 110 in accordance with procedures of the program in the EEPROM.

First, a flow of the image signal will be described with reference to Fig. 7.

When the power switch 101a is turned on, an on-state of the power switch 101a is detected by the main CPU 110, and electric power is supplied from a power source 130 to respective blocks including the main CPU 110, a photometric and distance measuring CPU 120, and the like. If the mode lever 101e is switched to an image-taking side when the electric power is supplied from the power source 130 to the respective blocks, the object image focused on the CCD 110 is firstly thinned out at given pitches and outputted as the image signal under control of the main CPU and the photometric and distance measuring CPU, and the object image based on the outputted image signal is displayed on a LCD panel 150 of an image display LCD. A timing signal is supplied from a clock generator (hereinafter referred to as a CG) 1121 to this CCD 112 under control of the photometric and ranging CPU, and the image signal is thinned out and outputted at the given pitches by way of this timing signal. This CG 1121 outputs the timing signal based on instructions from the main CPU 110 and the photometric and distance measuring CPU 120, and in addition to the CCD 112, the timing signal is also supplied to an A/D section 113 at a subsequent stage and to a white balance adjusting and γ processing section 114. Therefore, processes are performed in good order and smoothly in a flow at the CCD 112, and A/D section 113, and the white balance and γ processing section 114 synchronously with the timing signal.

When conversion into a digital signal is performed by the A/D section 113 synchronously with the timing signal outputted from the CG 1121 in response to the instruction of the respective CPUs 110 and 120 and white balance adjustment or γ correction is performed at the given pitches by the white balance and γ processing section 114, it is necessary to process the flows of their image signals appropriately. Therefore, a buffer memory 115 is provided at a subsequent stage and the timing for transferring the image signals to a YC processing section 116 at the given pitches is adjusted by the buffer memory 115. The image signals are transferred from the buffer memory 115 to the YC processing section 116 in order of older recording time. The image signal transferred to the YC processing section 116 is converted from a RGB signal into a YC signal by the YC processing section 116, and the converted YC signal is supplied to an image signal display LCD 15 through a bus 121. A YC-to-RGB converting section 151 for converting the YC signal into the RGB signal is provided at a precedent stage to this image display LCD 15. The YC signal is converted again into a RGB signal that conforms to a γ characteristic of the image display LCD 15, and the converted RGB signal is supplied to the image display LCD 15 through a driver 152. Image display of the object image is performed on the LCD panel 150 of the image display LCD 15 based on the supplied RGB signal. The CCD 112, the A/D section 113, and the WB/γ correcting section 114 are operated synchronously with the timing signal which is outputted from the CG 1121 as described above, and the image signals generated by the CCD 112 are processed at the given pitches. Accordingly, the object located in the direction of orientation of an image-taking lens is continued to be displayed on the display panel 150 of this image display LCD 15 constantly as the object image. When the shutter release button 102 is pushed at a right moment while visually checking the continuously displayed object image, all the image signal focused on the CCD 112 is outputted as the RGB signal after a lapse of a predetermined time period starting from the timing of pressing down the shutter release button 102. This RGB signal is converted into the YC signal by the YC processing section 116 and the YC signal is further compressed by a compressing and decompressing section 117, and then the compressed image signal is recorded on a memory card 119. In this compressing and decompressing section 117, a still image is compressed in accordance with a compression method which is compliant with the JPEG standard, and the image signal is recorded on the memory card 119. Pieces of compression information, image-taking information, and the like are written in a header section. When the mode lever 101e of this digital camera 100 is switched to a playback side, the header of that file is firstly read out of the memory card 119. Then, after the image signal is restored by decompressing the compressed image signal in the file based on the compression information in the header, the object image based on the image signal is displayed on the LCD panel 150.

Meanwhile, in addition to the main CPU 110, the digital camera 100 of this embodiment is provided with the discrete photometric and distance measuring CPU 120 configured to perform focus adjustment and exposure adjustment, and position control of a focusing lens 1110 and switching control of an aperture 1112 in the image-taking optical system are performed by this photometric and distance measuring CPU 120.

When allowing the photometric and distance measuring CPU 120 to perform the position control of the focusing lens 1110 and the switching control of the aperture 1112, the main CPU 110 causes the photometric and distance measuring CPU 120 to drive the focusing lens 1110 and also causes three LEDs 160a to 160c to emit light by allowing the photometric and distance measuring CPU 120 to control a LED light emission controlling section 16a included in an auxiliary light emitting section 16 so as to obtain sufficient object contrast when seeking distribution of brightness by separating a brightness signal with the YC processing unit 116 in the course of driving.

The photometric and distance measuring CPU 120, the focusing lens 1110, the YC processing section 116, the main CPU 110, and the auxiliary light emitting section 16 connectively constitute the AF section according to the present invention. Meanwhile, the photometric and distance measuring CPU 120, the aperture 1112, the YC processing section 116, and the main CPU 110 collectively constitute the AE section.

Now, explanation will be made on image-taking processing to be performed by the main CPU 110 when the power switch 101a is turned on while the image-taking mode is designated by the mode lever 101e and then the release button 102 is operated from half push to full push.

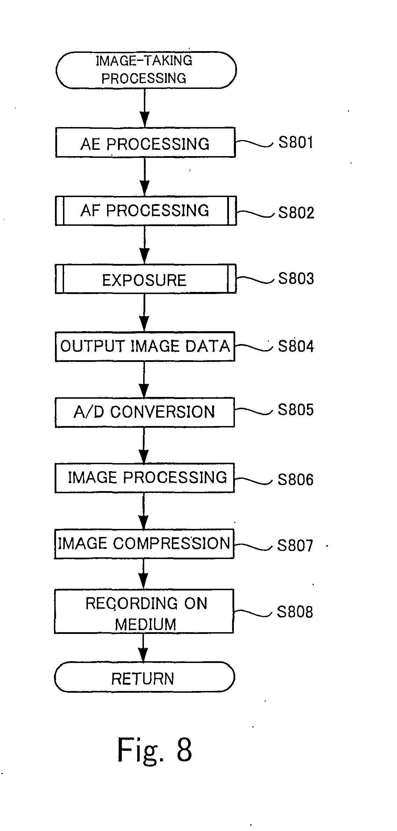

Fig. 8 is a flowchart showing procedures of the image-taking processing to be executed by the main CPU 110.

In step S801, when pressing the release button 102 halfway, AE processing, i.e. TTL photometry is performed based on a Y signal obtained by the YC processing and a result thereof is transmitted to the photometric and distance measuring CPU 120, thereby allowing the photometric and distance measuring CPU 120 to change a diameter of the aperture 112. Similarly when pressing the release button 102 halfway, AF processing, i.e. TTL ranging is performed in the next step S802. Therefore, the photometric and distance measuring CPU 120 is firstly instructed to cause the LED light emission controlling section to perform light emission of the three LEDs under control of the photometric and distance measuring CPU 120. Here, while allowing the LEDs to emit light, an instruction is issued to move the focusing lens 1110 along an optical axis, whereby the YC processing section is caused to detect brightness based on the image signal obtained by the CCD 112 while allowing the photometric and distance measuring CPU to drive the focusing lens 1110, and then the object contrast is calculated based on a result of the detection. Thereafter, the position where the calculated object contrast reaches the highest is defined as the focal position, and the focal position is informed to the photometric and distance measuring CPU 120 to move the focusing lens 1110 to the focal position. Here, when the release button 102 is fully pushed, an instruction is issued to the photometric and distance measuring CPU 120 in the next step S803 to start exposure by supplying an exposure start signal from the CG 1121 to the CCD 112. Upon completion of the exposure, an exposure end signal is supplied from the CG 1121 to the CCD 112, and the image signal is outputted from the CCD 112 to the A/D section 113 in the next step S804. In step S805, the A/D section 113 is caused to perform conversion of the analog image signal into the digital image signal and to supply the digital image signal to the white balance and γ processing section. In step S806, the white balance and γ processing section 114 is caused to perform image processing, and the image processing after undergoing the image processing is outputted to the buffer 115. The image signal outputted to the buffer 115 is transferred to the YC processing section 116 at appropriate timing, and the YC processing section 116 is allowed to perform image processing. Then the process goes to the next step. After causing the compressing and decompressing section 117 to perform image compression in step S807, an I/F 118 is caused to perform recording on a recording medium, which is the memory card 119 in this case, and the processing of this flow is completed.

Here, the configuration of the auxiliary light projecting section included in the digital camera 100 of this embodiment configured to emit AF auxiliary light when performing the AF processing in step S802 will be described. A projection module according to the present invention is embedded in this auxiliary light projecting section 16.

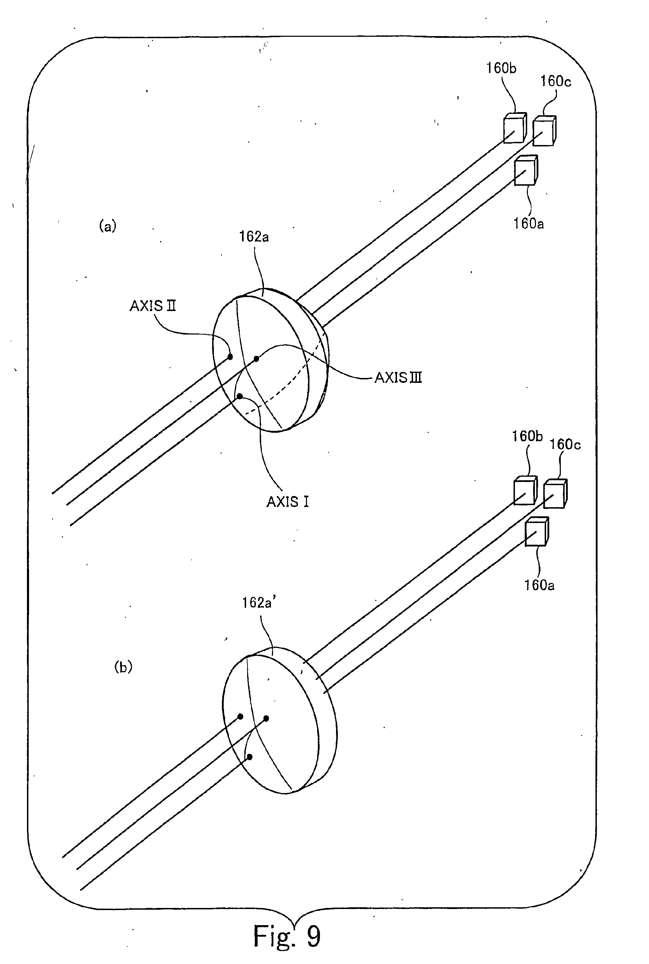

Fig. 9 is a view showing light sources and a projection optical element in the auxiliary light projecting section 16.

As shown in parts (a) and (b) of Fig. 9, the auxiliary light projecting section 16 includes the three LEDs 160a to 160c as the multiple light sources according to the present invention and a lens 162a as the projection optical element according to the present invention. As shown in Fig. 9, the projection light element according to the present invention is formed of the lens 162a which is subjected to region splitting into three projecting sections 1601 to 1603.

Part (a) of Fig. 9 shows the lens which is subjected to region splitting in terms of a first surface on the light source's side and a second surface on the object's side both as reflection surfaces, and is configured to allow the both reflection surfaces on the first surface and the second surface for each of the projecting sections to share optical axes AXISI to AXISIII. Part (b) of Fig. 9 shows a lens 162a' which is subjected to region splitting in terms of only the second surface out of the first surface on the light source's side and the second surface on the object's side as the reflection surfaces, and thus the lens 162a' falls outside the scope of the present invention.

Here, in order to obtain the same effect as an aspect to form light in beam shapes from three rays of light emitted from three light points respectively by use of three lenses into extensive light as a whole and then to project the extensive light onto the object, the single lens is provided with the three split regions 1601 to 1603 instead of independently disposing three lenses in consideration of downsizing.

Here, this embodiment describes an example of achieving substantial cost reduction by reducing production costs of components upon production of the auxiliary light projecting section included in this embodiment. For example, when providing the single lens with the three split regions as shown in the above-described lens, the substantial cost reduction in terms of the auxiliary light projecting section as a whole is achieved by reducing costs for producing a molding die for the lens and costs for the lens itself by providing parting lines between the reflection surfaces which extend radially from an approximate center, or by applying a low-cost small light source made of a small package as described previously in the section of Disclosure of the Invention.

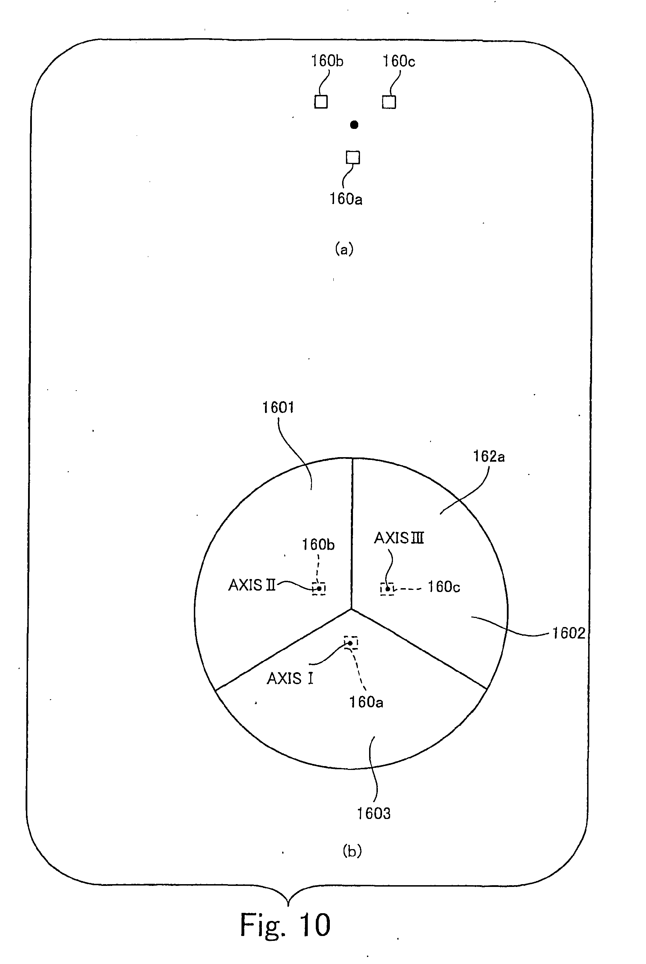

Fig. 10 is a view showing a configuration of the lens 162a intended to achieve the cost reduction, and showing configurations and positional relations of the three LEDs 160a to 160c in the small package.

Part (a) of fig. 10 is a view showing a state where three luminous points, which are the LEDs 160a to 160c here, are disposed one-by-one in respective positions surrounding a given central point, and part (b) of Fig. 10 is a view showing a state where intervals among different optical axes of the three projecting sections 1601 to 1603 included in the lens as the projection optical element are arranged so as to substantially coincide with intervals among the three luminous points.

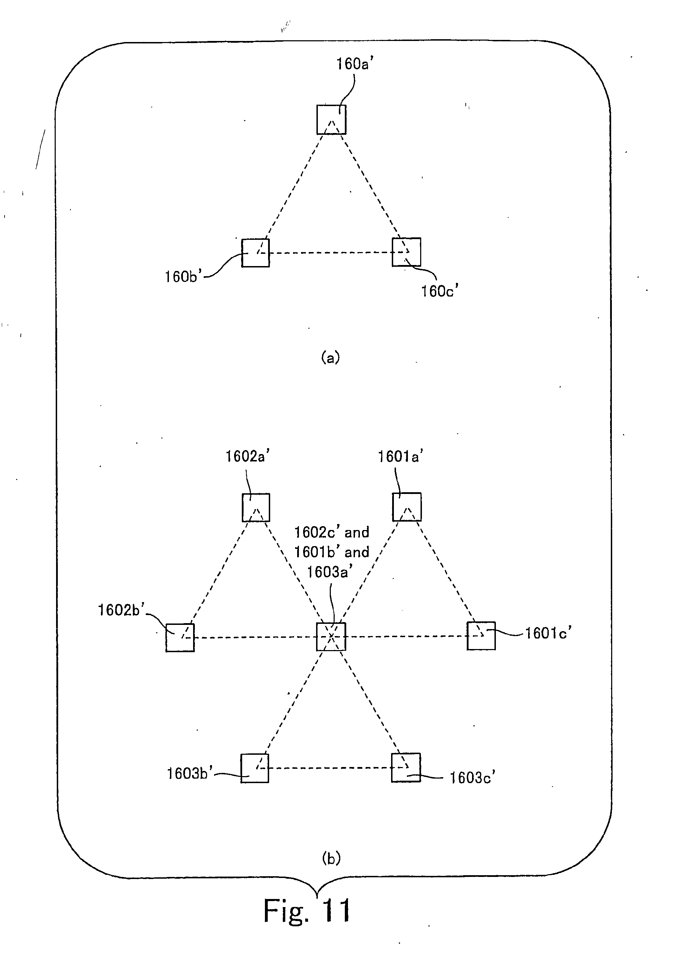

Meanwhile, Fig. 11 is a view respectively showing a projection pattern to be obtained from the light emitted from the three luminous points 160a after passage of one of the reflection surfaces 1601 or 1602 or 1603, and a projection pattern showing as to how the light emitted from the three luminous points 160a, 160b, and 160c shown in Fig. 10 is projected onto the object after passing through the lens 162a having the three split regions (the projecting sections according to the present invention) 1601, 1602, and 1603.

The light emitted from the three luminous points 160a, 160b, and 160c is formed into three beams as shown in part (a) of Fig. 11 and projected onto the object by way of the reflection surface of the lens, i.e. the single projecting section irrespective of which one of the lenses shown in part (a) of Fig. 9 and part (b) of Fig. 9 is applied hereto.

Since the lens 162a shown in part (b) of Fig. 10 includes the different optical axes AXISI to AXISIII depending on the reflection surfaces (the projecting sections) 1601, 1602, and 1603 that are split into three regions, the lens 162a functions as similar to three lenses. Accordingly, the respective rays of light emitted from the three luminous points 160a, 160b, and 160c pass through the respective reflection surfaces for projection, whereby a projection pattern having 9 light points as shown in part (b) of Fig. 11 is formed and projected onto the object.

That is, by arranging the light points 160a to 160c that constitute the multiple light sources and the lens 162a that constitutes the projection optical element as shown in part (b) of Fig. 10, the three rays of light emitted from the three luminous points 160a to 160c are projected such that single light beams (light beams 1602c' and 1601b' and 1603a' at the center of part (b) of Fig. 11) in terms of the three projecting sections out of the three light beams obtained by projecting the three rays of light emitted from the three luminous points 160a to 160c through the three projecting sections 1601 to 1603 substantially overlap one another.

In this way, it is possible to perform illumination having the distribution of brightness such that the central portion becomes three times as bright as the brightness equivalent to an amount of light achieved by one LED as a result of the overlap of the three beams, and that the respective luminous points around the central point have the original brightness.

As a result, it is possible to realize an image-taking apparatus including the auxiliary light projecting section, which is small in size in spite of using multiple projection elements and is capable of performing extensive illumination to a range including parallax while maintaining a certain degree of brightness until reaching.a given distance.

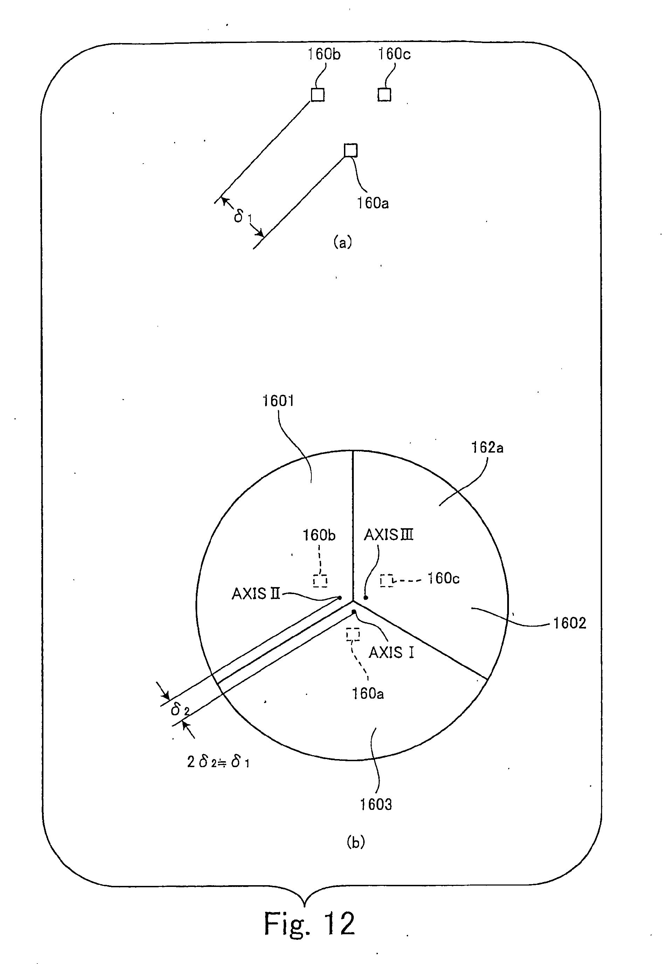

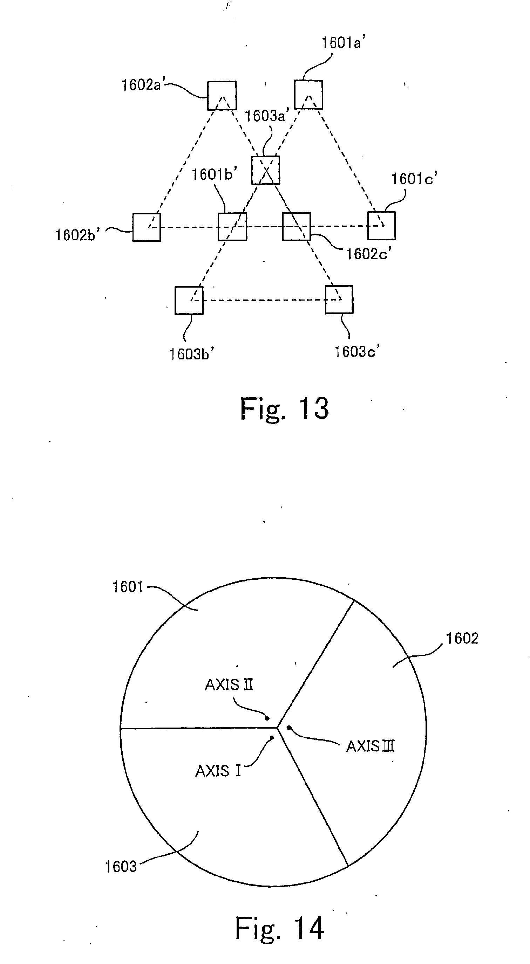

Fig. 12 is a view showing another layout of the three light points 160a to 160c and a positional relation with the lens 162a, which are different from Fig. 10. Fig. 13 is a view showing a projection pattern obtained by arranging the three light points and the lens as shown in Fig. 12.

In Fig. 10, a layout interval σ1 of the light points is substantially aligned with an interval σ2 of each of the optical axes included in the three reflection surfaces (the projecting sections) and the three light points 160a, 160b, and 160c are disposed on the three light axes AXISI to AXISIII. On the contrary, Fig. 12 shows a layout in which the interval σ2 between the optical axes of the three projecting sections is approximately equal to 1/2 of the interval σ1 between the light points (2σ2 ≈ σ1 in the drawing).

A projection pattern as shown in Fig. 13 is obtained by the layout shown in part (b) of Fig. 12.

The projection pattern illustrated in Fig. 13 shows an aspect of projection in which the three rays of light emitted from the three luminous points 160a to 160c are projected such that one of the light beams 1601b' out of the three light beams 1601a', 1601b', and 1601c' projected by one of the projecting sections such as 1601 is positioned in the center of the two light beams 1602b' and 1602c' out of the three light beams 1602a' to 1602c' of another one of the projecting sections such as 1602.

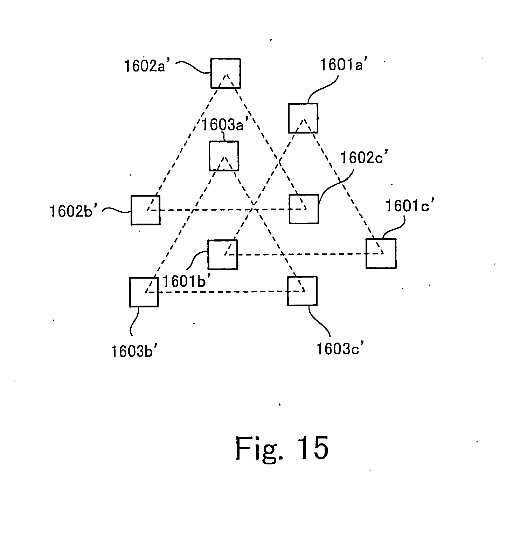

Fig. 14 shows a layout example in an attempt to modify the projection pattern by twisting the parting lines shown in part (b) of Fig. 12 by 30 degrees. Fig. 15 is a view showing a projection pattern in the case of performing projection in the layout of Fig. 14.

The projection pattern illustrated in Fig. 15 shows an aspect of projection in which the three rays of light emitted from the three luminous points 160a to 160c are projected such that one of the light beams 1603a' projected by one of the projecting sections 1603 is positioned in the center of the three light beams 1601a' to 1601c' projected by another one of the projecting sections such as 1601.

A similar illumination effect to the case of Fig. 13 is also obtained in this case.

As described above, it is possible to realize the image-taking apparatus including the auxiliary light projecting section, which is small in size in spite of using the multiple projection elements and is capable of performing extensive illumination to the range including the parallax while maintaining the certain degree of brightness until reaching the given distance.

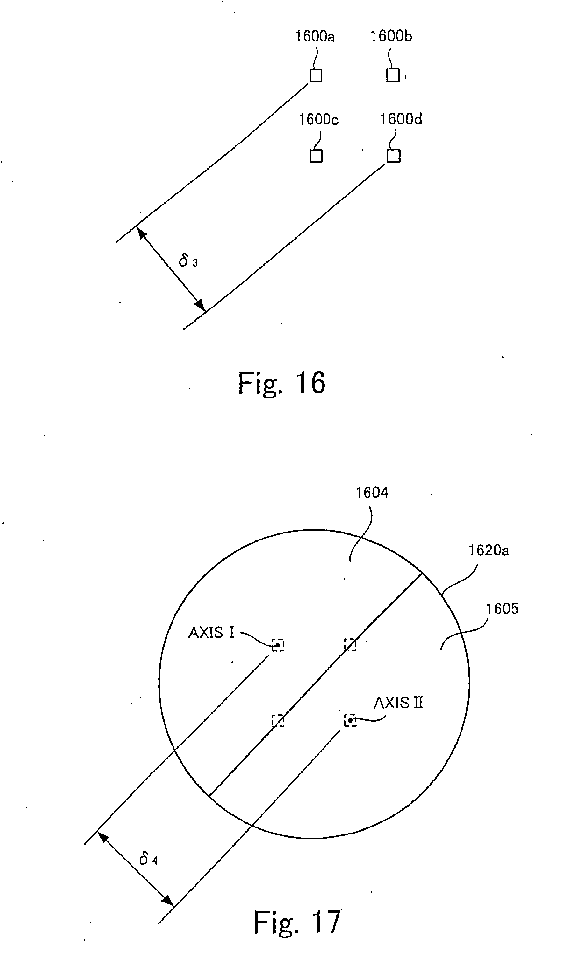

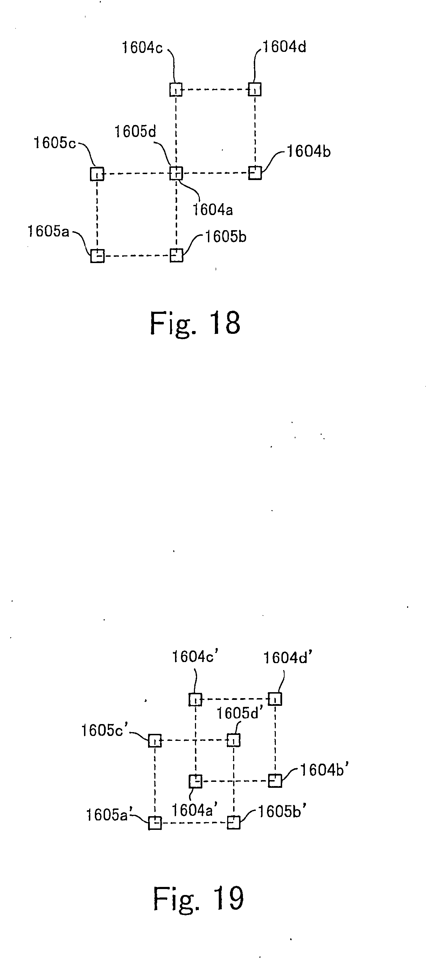

Fig. 16 is a view showing a layout of light points when providing four LEDs 1600a to 1600d as the light sources. Fig. 17 is a view showing the layout interval between the four LEDs and a positional relation with optical axes of a lens. Fig. 18 is a view showing a projection pattern when a relation between the layout interval σ4 of the light points shown in Fig. 16 and an interval σ3 between two light axes (two projecting sections) shown in Fig. 17 is set to σ3 ≈ σ4. Fig. 19 is a view showing a projection pattern when the layout interval σ4 of the light points shown in Fig. 16 and the interval σ3 between the two light axes (the two projecting sections) shown in Fig. 17 is set to σ3 ≈ 2σ4.

The projection pattern shown in Fig. 18 is obtained by setting σ3 ≈ σ4 as similar to Fig. 10, and the projection pattern shown in Fig. 19 is obtained by setting σ3 ≤ 2σ4 as similar to Fig. 12.

The projection pattern illustrated in Fig. 18 shows an aspect of projection in which four rays of light emitted from the four luminous points 1600a to 1600d are projected such that single light beams (light beams 1605d and 1604a in Fig. 18) in terms of each of two projecting sections 1604 or 1605 out of the four light beams obtained by projecting the four rays of light substantially overlap one another. The projection pattern illustrated in Fig. 19 shows an aspect of projection in which the four rays of light emitted from the four luminous points 1600a to 1600d are projected such that one of the light beams 1605a' projected by one of the projecting sections 1605 is positioned in the center of the four light beams projected by another one of the projecting sections 1604.

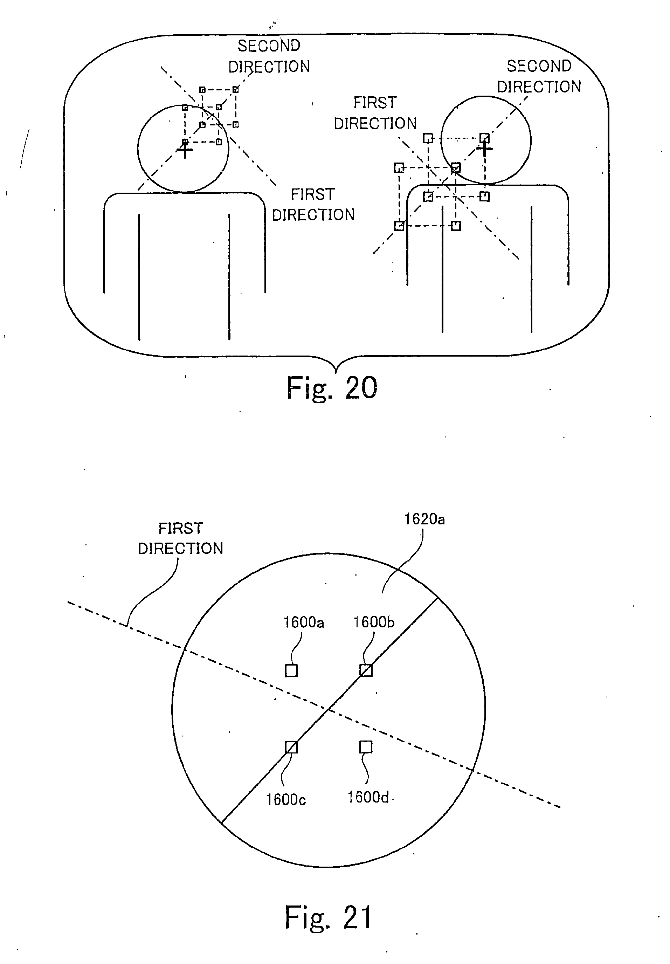

Fig. 20 is a view corresponding to Fig. 5, which is the view for explaining an illumination range when auxiliary light is projected by use of the projection pattern shown in Fig. 19. As it is apparent in comparison with Fig. 4 and Fig. 5, illumination is performed in a range including parallax both at a long distance and at a short distance.

That is, a pattern including all the multiple light spots (two overlapping squares) on a plane (two squares shown in Fig. 20) spreading orthogonally to the four light beams, which are formed by the two light beams projected by the two projecting sections according to the present invention, constitute the projection pattern in the range including the parallax described in Fig. 5.

Fig. 21 is a view for explaining a layout of a lens 1602a as the projection optical element and the layout relation between the image-taking optical system and the auxiliary light projecting section described in Fig. 2.

As shown in Fig. 21, when a dimension in a first direction identical to a direction (a line indicated with a dashed line in Fig. 21) of linking the image-taking optical system with the projection optical element in the plane of the projection pattern is compared with a dimension in a second direction orthogonal to the first direction in the plane, the lens 1620a is disposed in an orientation to form a shape such that the first direction extends longer than the second direction.

In this way, it is possible to realize the image-taking apparatus including the auxiliary light projecting section, which is small in size in spite of using the multiple projection elements and is capable of performing extensive illumination to the range including the parallax while maintaining the certain degree of brightness until reaching the given distance.

As described above, according to the present invention, it is possible to realize a projection module which is small in size in spite of using multiple projection elements and is capable of performing extensive illumination to a range including parallax while maintaining a certain degree of brightness until reaching a given distance, and to realize an image-taking apparatus including an auxiliary light projecting section having a function as the projection module.

## Claims

1. An image-taking apparatus (100) configured to focus an object image onto an image pickup device (112) through an image-taking optical system (111) and thereby to generate an image signal, comprising:
an auto focus section (120, 1110, 116, 110, 16) that performs measurement utilizing distribution of brightness of field and performs auto focusing to adjust the image-taking optical system (111) to a focused state,
wherein the auto focus section (120, 1110, 116, 110, 16) includes an auxiliary light projecting section (16) that projects an auxiliary light beam onto an object when performing auto focusing, and
the auxiliary light projecting section (16) includes:
a light source (160) having multiple luminous points (160a, 160b, 160c; 1600a, 1600b, 1600c, 1600d); and
a projection optical element (162a) adapted to project the light emitted from the multiple luminous points (160a, 160b, 160c; 1600a, 1600b, 1600c, 1600d) in a beam fashion onto the object and including multiple projecting sections (1601, 1602, 1603; 1604, 1605) each being provided with a different optical axis and each projecting the multiple rays of light emitted from the multiple luminous points (160a, 160b, 160c; 1600a, 1600b, 1600c, 1600d) as multiple light beams,
wherein the projection optical element (162a) is a single optical element subjected to region splitting into the multiple projecting sections (1601, 1602, 1603), **characterized in that** each of the multiple projecting sections (1601, 1602, 1603; 1604, 1605) comprises a first surface on the light source's side and a second surface on the object's side both being subjected to region splitting as reflection surfaces, and both of the reflection surfaces of the first surface and the second surface of each of the projecting sections (1601, 1602, 1603; 1604, 1605) share an optical axis in common; and wherein the projection optical element (162a) comprises parting lines between the reflection surfaces, said parting lines extending radially from an approximate centre.

2. The image-taking apparatus according to claim 1,
wherein the multiple luminous points (160a, 160b, 160c; 1600a, 1600b, 1600c, 1600d) are disposed one-by-one in respective positions surrounding a given central point.

3. The image-taking apparatus according to claim 1,
wherein the projection optical element (162a) is configured to project the multiple rays of light emitted from the multiple luminous points (160a, 160b, 160c; 1600a, 1600b, 1600c, 1600d) such that one among the multiple light beams projected by the multiple projecting sections (1601, 1602, 1603; 1604, 1605) substantially overlaps one another.

4. The image-taking apparatus according to claim 1,
wherein the projection optical element (162a) is configured to project the multiple rays of light emitted from the multiple luminous points (160a, 160b, 160c; 1600a, 1600b, 1600c, 1600d) so as to locate one of the multiple light beams projected by one of the projecting sections (1601, 1602, 1603; 1604, 1605) onto the centre of the multiple light beams projected by another one of the projecting sections (1601, 1602, 1603; 1604, 1605).

5. The image-taking apparatus according to claim 1,
wherein the projection optical element (162) is configured to project the multiple rays of light emitted from the multiple luminous points (160a, 160b, 160c; 1600a, 1600b, 1600c, 1600d) so as to locate one of the multiple light beams projected by one of the projecting sections (1601, 1602, 1603; 1604, 1605) onto the centre of two light beams out of the multiple light beams projected by another one of the projecting sections (1601, 1602, 1603; 1604, 1605).

6. The image-taking apparatus according to claim 1,
wherein the light source comprises three luminous points (160a, 160b, 160c) while the projection optical system comprises three projecting sections (1601, 1602, 1603).

7. The image-taking apparatus according to claim 1,
wherein the light source comprises four luminous points (1600a, 1600b, 1600c, 1600d) while the projection optical system comprises two projecting sections (1604, 1605).

8. The image-taking apparatus according to claim 1,
wherein the multiple projecting sections (1601, 1602, 1603; 1604, 1605) are set such that an interval between optical axes of the multiple projecting sections (1601, 1602, 1603; 1604, 1605) substantially coincides with an interval between the multiple luminous points (160a, 160b, 160c; 1600a, 1600b, 1600c, 1600d).

9. The image-taking apparatus according to claim 1,
wherein the multiple projecting sections (1601, 1602, 1603; 1604, 1605) are set such that an interval between optical axes of these multiple projecting sections (1601, 1602, 1603; 1604, 1605) is substantially half as long as an interval between the multiple luminous points (160a, 160b, 160c; 1600a, 1600b, 1600c, 1600d).

10. The image-taking apparatus according to claim 7,
wherein, in terms of a pattern made of all multiple light spots on a plane spread orthogonally to multiple light beams which is formed by the multiple light beams projected from the two projecting sections (1604, 1605), when a dimension in a first direction identical to a direction of linking the image-taking optical system with the projection optical element in the plane is compared with a dimension in a second direction orthogonal to the first direction in the plane, the projection optical element (162a) is disposed in an orientation to form a shape such that the first direction extends longer than the second direction.

11. A projection module configured to project a light beam, for use as the auxiliary light projecting section of the image-taking device of claim 1.

## Patentansprüche

1. Bildaufnahmevorrichtung (100), die zum Fokussieren eines Objektbilds auf eine Bildaufnahmeeinrichtung (112) durch ein optisches Bildaufnahmesystem (111) konfiguriert ist, um dadurch ein Bildsignal zu erzeugen, umfassend:
einen Autofokusabschnitt (120, 1110, 116, 110, 16), der eine Messung unter Verwendung einer Helligkeitsverteilung eines Felds durchführt und eine Autofokussierung durchführt, um das optische Bildaufnahmesystem (111) auf einen fokussierten Zustand einzustellen,
wobei der Autofokusabschnitt (120, 1110, 116, 110, 16) einen Hilfslichtprojektionsabschnitt (16) enthält, der einen Hilfslichtstrahl auf ein Objekt projiziert, wenn eine Autofokussierung durchgeführt wird, und
der Hilfslichtprojektionsabschnitt (16) folgendes enthält:
eine Lichtquelle (160) mit mehreren leuchtenden Punkten (160a, 160b, 160c; 1600a, 1600b, 1600c, 1600d); und
ein optisches Projektionselement (162a), das zum Projizieren des von den mehreren leuchtenden Punkten (160a, 160b, 160c; 1600a, 1600b, 1600c, 1600d) auf eine Strahlart emittierten Lichts auf das Objekt geeignet ist und mehrere Projektionsabschnitte (1601, 1602, 1603; 1604, 1605) enthält, die jeweils mit einer anderen optischen Achse versehen sind und jeweils die mehreren Strahlen von von den mehreren leuchtenden Punkten (160a, 160b, 160c; 1600a, 1600b, 1600c, 1600d) emittiertem Licht als mehrere Lichtstrahlen projizieren,
wobei das optische Projektionselement (162a) ein einzelnes optisches Element ist, das einer Bereichsaufteilung in die mehreren Projektionsabschnitte (1601, 1602, 1603) unterzogen ist,
**dadurch gekennzeichnet, dass** jeder der mehreren Projektionsabschnitte (1601, 1602, 1603; 1604, 1605) eine erste Oberfläche auf der Lichtquellenseite und eine zweite Oberfläche auf der Objektseite aufweist, die beide einer Bereichsaufteilung als Reflexionsoberflächen unterzogen sind, und beide der Reflexionsoberflächen der ersten Oberfläche und der zweiten Oberfläche von jedem der Projektionsabschnitte (1601, 1602, 1603; 1604, 1605) eine optische Achse gemeinsam nutzen; und
wobei das optische Projektionselement (162a) Trennlinien zwischen den Reflexionsoberflächen aufweist, wobei sich die Trennlinien von einem ungefähren Zentrum radial erstrecken.

2. Bildaufnahmevorrichtung nach Anspruch 1,
wobei die mehreren leuchtenden Punkte (160a, 160b, 160c; 1600a, 1600b, 1600c, 1600d) einer nach dem anderen in jeweiligen Positionen angeordnet sind, die einen gegebenen zentralen Punkt umgeben.

3. Bildaufnahmevorrichtung nach Anspruch 1,
wobei das optische Projektionselement (162a) zum derartigen Projizieren der mehreren Strahlen von von den mehreren leuchtenden Punkten (160a, 160b, 160c; 1600a, 1600b, 1600c, 1600d) emittiertem Licht konfiguriert ist, dass einer unter den durch die mehreren Projektionsabschnitte (1601, 1602, 1603; 1604, 1605) projizierten mehreren Lichtstrahlen einander im Wesentlichen überlagert.

4. Bildaufnahmevorrichtung nach Anspruch 1,
wobei das optische Projektionselement (162a) zum Projizieren der mehreren Strahlen von von den mehreren leuchtenden Punkten (160a, 160b, 160c; 1600a, 1600b, 1600c, 1600d) emittiertem Licht konfiguriert ist, um einen der durch einen der Projektionsabschnitte (1601, 1602, 1603; 1604, 1605) projizierten mehreren Lichtstrahlen auf das Zentrum der durch einen anderen der Projektionsabschnitte (1601, 1602, 1603; 1604, 1605) projizierten mehreren Lichtstrahlen anzuordnen.

5. Bildaufnahmevorrichtung nach Anspruch 1,
wobei das optische Projektionselement (162a) zum Projizieren der mehreren Strahlen von von den mehreren leuchtenden Punkten (160a, 160b, 160c; 1600a, 1600b, 1600c, 1600d) emittiertem Licht konfiguriert ist, um einen der durch einen der Projektionsabschnitte (1601, 1602, 1603; 1604, 1605) projizierten mehreren Lichtstrahlen auf das Zentrum von zwei Lichtstrahlen aus den durch einen anderen der Projektionsabschnitte (1601, 1602, 1603; 1604, 1605) projizierten mehreren Lichtstrahlen anzuordnen.

6. Bildaufnahmevorrichtung nach Anspruch 1,
wobei die Lichtquelle drei leuchtende Punkte (160a, 160b, 160c) aufweist, während das optische Projektionssystem drei Projektionsabschnitte (1601, 1602, 1603) aufweist.

7. Bildaufnahmevorrichtung nach Anspruch 1,
wobei die Lichtquelle vier leuchtende Punkte (1600a, 1600b, 1600c, 1600d) aufweist, während das optische Projektionssystem zwei Projektionsabschnitte (1604, 1605) aufweist.

8. Bildaufnahmevorrichtung nach Anspruch 1,
wobei die mehreren Projektionsabschnitte (1601, 1602, 1603; 1604, 1605) so eingestellt sind, dass ein Abstand zwischen optischen Achsen der mehreren Projektionsabschnitte (1601, 1602, 1603; 1604, 1605) im Wesentlichen mit einem Abstand zwischen den mehreren leuchtenden Punkten (160a, 160b, 160c; 1600a, 1600b, 1600c, 1600d) übereinstimmt.

9. Bildaufnahmevorrichtung nach Anspruch 1,
wobei die mehreren Projektionsabschnitte (1601, 1602, 1603; 1604, 1605) so eingestellt sind, dass ein Abstand zwischen optischen Achsen von diesen mehreren Projektionsabschnitte (1601, 1602, 1603; 1604, 1605) im Wesentlichen halb so lang wie ein Abstand zwischen den mehreren leuchtenden Punkten (160a, 160b, 160c; 1600a, 1600b, 1600c, 1600d) ist.

10. Bildaufnahmevorrichtung nach Anspruch 7,
wobei in Bezug auf ein von allen mehreren Leuchtflecken auf einer Ebene, die sich orthogonal zu mehreren Lichtstrahlen ausbreitet, hergestelltes Muster, das durch die von den zwei Projektionsabschnitten (1604, 1605) projizierten mehreren Lichtstrahlen ausgebildet ist, dann, wenn eine Dimension in einer ersten Richtung identisch zu einer Richtung einer Verknüpfung des optischen Bildaufnahmesystems mit dem optischen Projektionselement in der Ebene mit einer Dimension in einer zweiten Richtung orthogonal zu der ersten Richtung in der Ebene verglichen wird, das optische Projektionselement (162a) in einer Ausrichtung angeordnet ist, um eine derartige Form auszubilden, dass sich die erste Richtung länger als die zweite Richtung erstreckt.

11. Projektionsmodul, das zum Projizieren eines Lichtstrahls konfiguriert ist, zur Verwendung als Hilfslichtprojektionsabschnitt der Bildaufnahmevorrichtung nach Anspruch 1.

## Revendications

1. Appareil de prise d'image (100) configuré pour mettre au point l'image d'un objet sur un dispositif de prise d'image (112) par l'intermédiaire d'un système optique de prise d'image (111) et pour générer ainsi un signal d'image, comprenant :
une section de mise au point automatique (120, 1110, 116, 110, 16) qui effectue une mesure en utilisant la répartition de luminosité de champ et effectue une mise au point automatique pour régler le système optique de prise d'image (111) dans un état mis au point,
dans lequel la section de mise au point automatique (120, 1110, 116, 110, 16) comporte une section de projection de lumière auxiliaire (16) qui projette un faisceau de lumière auxiliaire sur un objet lorsqu'elle effectue la mise au point automatique, et
la section de projection de lumière auxiliaire (16) comporte :
une source de lumière (160) comportant des points lumineux multiples (160a, 160b, 160c, 1600a, 1600b, 1600c, 1600d) ; et
un élément optique de projection (162a) adapté à projeter la lumière émise par les points lumineux multiples (160a, 160b, 160c, 1600a, 1600b, 1600c, 1600d) d'une façon par faisceau sur l'objet et incluant plusieurs sections de projection (1601, 1602, 1603; 1604, 1605) chacune étend dotée d'un axe optique différent et chacune projetant les rayons de lumière multiples émis par les points lumineux multiples (160a, 160b, 160c, 1600a, 1600b, 1600c, 1600d) en tant que faisceaux de lumière multiples,
dans lequel l'élément optique de projection (162a) est un simple élément optique faisant l'objet d'une séparation de région dans les sections de projection multiples (1601, 1602, 1603),
**caractérisé en ce que** chacune des sections de projection multiples (1601, 1602, 1603; 1604, 1605) comprend une première surface du côté de la source de lumière et une seconde surface du côté de l'objet, toutes deux faisant l'objet d'une séparation de région en tant que surfaces de réflexion, et les deux surfaces de réflexion de la première surface et de la seconde surface de chacune des sections de projection (1601, 1602, 1603; 1604, 1605) partagent en commun un axe optique ; et
dans lequel l'élément optique de projection (162a) comprend des lignes de partage entre les surfaces de réflexion, lesdites lignes de partage s'étendant radialement depuis un centre approximatif.

2. Appareil de prise d'image selon la revendication 1,
dans lequel les points lumineux multiples (160a, 160b, 160c, 1600a, 1600b, 1600c, 1600d) sont disposés un par un dans des positions respectives entourant un point central donné.

3. Appareil de prise d'image selon la revendication 1,
dans lequel l'élément optique de projection (162a) est configuré pour projeter les rayons de lumière multiples émis par les points lumineux multiples (160a, 160b, 160c, 1600a, 1600b, 1600c, 1600d) de telle sorte qu'un faisceau parmi les faisceaux de lumière multiples projetés par les sections de projections multiples (1601, 1602, 1603; 1604, 1605) se recouvrent sensiblement entre eux.

4. Appareil de prise d'image selon la revendication 1,
dans lequel l'élément optique de projection (162a) est configuré pour projeter les rayons de lumière multiples émis par les points lumineux multiples (160a, 160b, 160c, 1600a, 1600b, 1600c, 1600d) de façon à localiser l'un des faisceaux de lumière multiples projetés par l'une des sections de projection (1601, 1602, 1603; 1604, 1605) sur le centre des faisceaux de lumière multiples projetés par une autre section des sections de projection (1601, 1602, 1603; 1604, 1605).

5. Appareil de prise d'image selon la revendication 1,
dans lequel l'élément optique de projection (162) est configuré pour projeter les rayons de lumière multiples émis par les points lumineux multiples (160a, 160b, 160c, 1600a, 1600b, 1600c, 1600d) de façon à localiser l'un des faisceaux de lumière multiples projetés par l'une des sections de projection (1601, 1602, 1603; 1604, 1605) sur le centre de deux faisceaux de lumière parmi les faisceaux de lumière multiples projetés par une autre section des sections de projection multiples (1601, 1602, 1603; 1604, 1605).

6. Appareil de prise d'image selon la revendication 1,
dans lequel la source de lumière comprend trois points lumineux (160a, 160b, 160c) tandis que le système optique de projection comprend trois sections de projection (1601, 1602, 1603).

7. Appareil de prise d'image selon la revendication 1,
dans lequel la source de lumière comprend quatre points lumineux (1600a, 1600b, 1600c, 1600d) tandis que le système optique de projection comprend deux sections de projection (1604, 1605).

8. Appareil de prise d'image selon la revendication 1,
dans lequel les sections de projection multiples (1601, 1602, 1603; 1604, 1605) sont réglées de telle sorte que l'intervalle entre les axes optique des sections de projection multiples (1601, 1602, 1603; 1604, 1605) coïncide sensiblement avec l'intervalle entre les points lumineux multiples (160a, 160b, 160c, 1600a, 1600b, 1600c, 1600d).

9. Appareil de prise d'image selon la revendication 1,
dans lequel les sections de projection multiples (1601, 1602, 1603; 1604, 1605) sont réglées de telle sorte que l'intervalle entre les axes optique de ces sections de projection multiples (1601, 1602, 1603; 1604, 1605) ait une longueur sensiblement égale à la moitié de la longueur de l'intervalle entre les points lumineux multiples (160a, 160b, 160c, 1600a, 1600b, 1600c, 1600d).

10. Appareil de prise d'image selon la revendication 7,
dans lequel, en termes de motif fait de l'ensemble des impacts de lumière multiples sur un plan s'étendant orthogonalement par rapport aux faisceaux de lumière multiples formés par les faisceaux de lumière multiples se projetant depuis les deux sections de projection (1604, 1605) lorsque la dimension dans une première direction identique à la direction de liaison du système optique de prise d'image avec l'élément optique de projection dans le plan est comparée à la dimension dans une seconde direction orthogonale à la première direction dans le plan, l'élément optique de projection (162a) est disposé dans une orientation donnant une forme telle que la première direction s'étend sur une plus grande longueur que la seconde direction.

11. Module de projection configuré pour projeter un faisceau de lumière, destiné à être utilisé en tant que section de projection de lumière auxiliaire du dispositif de prise d'image selon la revendication 1.
